# EUROPÄISCHE PATENTSCHRIFT

(11) **EP 2 370 523 B1**
(45) Veröffentlichungstag und Bekanntmachung des Hinweises auf die Patenterteilung: **17.10.2012**
(21) Anmeldenummer: 09744341.0
(22) Anmeldetag: 28.10.2009
(51) Int. Cl.: C09B 57/00, C09B 67/22, C09D 5/00, C09B 63/00

(54) **FLOCKUNGSSTABILE DIKETOPYRROLOPYRROL-PIGMENTZUBEREITUNGEN**
FLOCCULATION RESISTANT DIKETOPYRROLOPYRROLE PIGMENT PREPARATIONS
PRÉPARATIONS DE PIGMENTS DE DICÉTOPYRROLOPYRROLE STABLES À LA FLOCULATION

(30) Priorität: 25.11.2008 DE 102008058951
(43) Veröffentlichungstag der Anmeldung: 05.10.2011
(73) Patentinhaber: Clariant Finance (BVI) Limited, Road Town, Tortola (VG)
(72) Erfinder: PAETZOLD, Jens, 68642 Bürstadt (DE); PLÜG, Carsten, 64367 Mühltal/Niederbeerbach (DE)
(74) Vertreter: Hütter, Klaus
(86) Internationale Anmeldenummer: PCT/EP2009/007694
(87) Internationale Veröffentlichungsnummer: WO 2010/060516

(56) Entgegenhaltungen:
- EP-A2- 0 224 445
- EP-A2- 0 243 304
- WO-A1-98/56859

## Beschreibung

Die vorliegende Erfindung betrifft eine C.I. Pigment Red 254-Zubereitung enthaltend spezielle sulfonierte und verlackte Synergisten der Formeln (II) und ggf. (III).

Ein bei der Anwendung von Diketopyrrolopyrrol (DPP)-Pigmenten häufig auftretendes Problem ist die Flockung des Pigmentes im Lack. Das Pigment sedimentiert während der Trocknung im Lacksystem und führt zu einer deutlichen Änderung des Farbtons. Als Resultat ergeben sich trübe Farbtöne mit niedrigem Glanz. Dieser Effekt wirkt sich besonders negativ bei der Nachlackierung oder Ausbesserung von lackierten Flächen aus, da die Flockung abhängig ist von der Dauer und Art der Auftragung des Lacks. Es ist bekannt, dass die Flockung von DPP-Pigmenten durch Synergisten verringert werden kann. Typische Beispiele für Synergisten sind DPP-basierte anionische Additive, die Sulfonsäuren, Carbonsäuren oder Phosphonsäuren enthalten, wie beispielsweise in EP 0 224 445 A2 EP 0243304, EP 0 430 875 A2 und . DE 40 37 556 A1 beschreiben. Die säuregruppenhaltigen Synergisten können mit einem Ammonium- oder Metallkation verlackt sein.

Der Einsatz der bisher bekannten Synergisten in Kombination mit C.I. Pigment Rot 254 führt zur Einschränkung der Universalität des Pigments. Beispielsweise bewirken diese Synergisten eine starke Verschiebung des Farbtones gegenüber dem reinen C.I. Pigment Rot 254. Zur Verringerung dieser Farbtonabweichung setzt man daher minimale Mengen von DPP-basierenden Synergisten ein. Jedoch lässt sich die Farbtonabweichung nicht vollständig unterdrücken. Ein wesentlicher Nachteil der in Kombination mit PR 254 bisher verwendeten Synergisten liegt in einer deutlich schlechteren Überlackierechtheit nach DIN EN20105-A02 bei Wasserbasislacken .

Daher bestand die Aufgabe, eine Pigmentzubereitung bereitzustellen, die einerseits die Flockung von C.I. Pigment Rot 254 verhindert und gleichzeitig gegenüber dem unbehandelten Pigment einen vergleichbaren Farbton und eine vergleichbare Überlackierechtheit nach DIN EN20105-A02 insbesondere in Wasserbasislacken aufweist.

Überraschenderweise wurde gefunden, dass eine PR 254-Pigmentzubereitung mit nachstehend definierten, speziell verlackten DPP-Synergisten diese Aufgabe lösen.

Gegenstand der Erfindung ist eine Pigmentzubereitung, enthaltend
a) 95 bis 99,9 Gew.-% C.I. Pigment Rot 254 der Formel (I), bevorzugt 97 bis 99,9 Gew.-%, besonders bevorzugt 98,5 bis 99,9 Gew.-%;
b) 0,1 bis 5 Gew.-% des Sulfonsäuresalzes der Formel (II), bevorzugt 0,1 bis 3 Gew.-%, besonders bevorzugt 0,1 bis 1,5 Gew.-%;
c) 0 bis 0,5 Gew.-% des Bissulfonsäuresalzes der Formel (III), bevorzugt 0 bis 0,3 Gew.-%, besonders bevorzugt 0 bis 0,2 Gew.-%,
   jeweils bezogen auf das Gesamtgewicht (100 Gew.-%) der Pigmentzubereitung 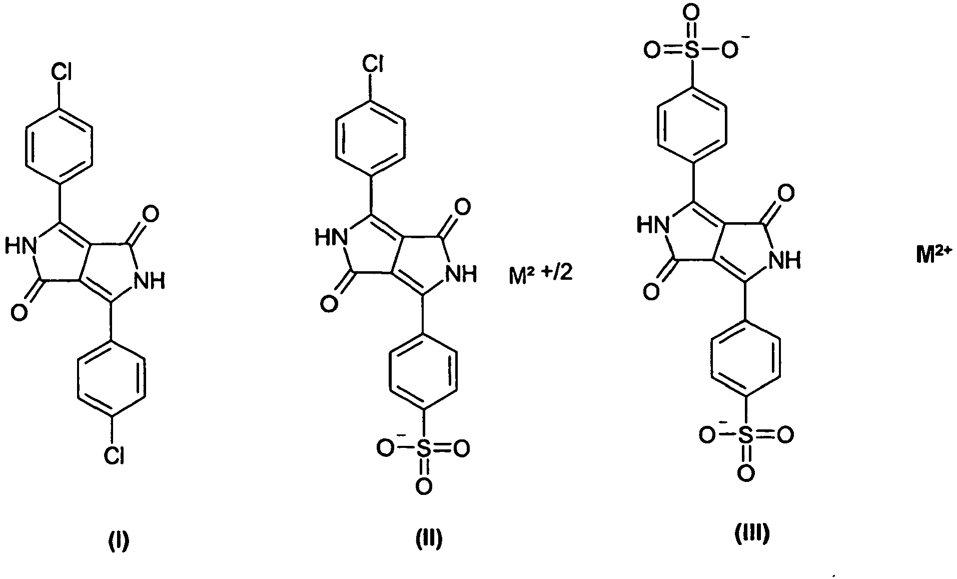
wobei M²⁺ einem Strontiumion, einem Bariumion oder einer Mischung aus Strontium- und Bariumionen entspricht, vorzugsweise jedoch Strontium ist.

Im Falle, dass das Bissulfonsäuresalz der Formel (III) vorhanden ist, beträgt sein Gehalt zweckmäßig 0,01 bis 0,5 Gew.-%, bevorzugt 0,01 bis 0,3 Gew.-%, besonders bevorzugt 0,01 bis 0,2 Gew.-%, bezogen auf das Gesamtgewicht der Pigmentzubereitung.

Die Herstellung der Synergisten der Formel (II) und (III) kann durch eine übliche DPP-Mischsynthese mit einer entsprechenden Mischung aus Benzonitril und 4-Chlor-benzonitril, z. B. gemäß DE 40 37 556 A1, Beispiel 1, und anschließender Sulfonierung und Verlackung mit Sr und/oder Ba erfolgen. Das so erhaltene Gemisch besteht zu etwa 30 bis 70 Gew.-% aus C.I. Pigment Rot 254, 20 bis 50 Gew.% aus Monosulfonsäuresalz und 5 bis 30 Gew.-% Bissulfonsäuresalz. Es kann mit weiterem C.I. Pigment Rot 254 auf die gewünschte Einsatzkonzentration gebracht werden.

Alternativ kann der Synergist der Formel (II) in reiner Form durch Sulfonierung und anschließende Verlackung des z.B. nach EP 0 184 982 A1, Beispiel 6 hergestellten unsymmetrischen Diketopyrrolopyrroles (IV) gemäß dem folgenden Schema erfolgen. 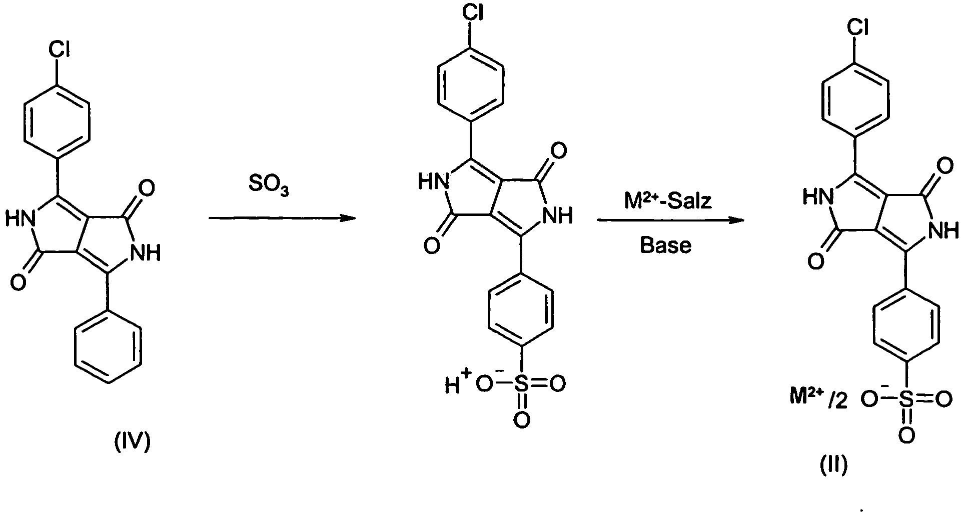 Die besagte Verlackung erfolgt zweckmäßigerweise mit einem löslichen anorganischen Barium- und/oder Strontiumsalz, wie Barium- oder Strontiumhalogenid, -hydroxid oder -acetat, bevorzugt -chlorid, -bromid und -acetat, in einem geeigneten Lösungsmittel, vorzugsweise Wasser, gelöst oder als Suspension. Besonders bevorzugt sind BaCl₂ oder SrCl₂, bei einem pH-Wert zwischen 3,5 und 12, besonders bevorzugt zwischen pH 7 und pH 10, bei einer Temperatur zwischen 20 und 100 °C, besonders bevorzugt zwischen 50 und 80 °C.

C.I. Pigment Rot 254 der Formel (I) kann nach üblichen, dem Fachmann bekannten Verfahren hergestellt werden. Je nach gewünschtem Anwendungsgebiet können sowohl transparente als auch deckende Kristallformen in die erfindungsgemäße Pigmentzubereitung eingesetzt werden. Bevorzugt ist der Einsatz in Lacksystemen, wofür deckende Kristallformen erwünscht sind, die z.B. nach EP 0 094 911 A2, Beispiel 6, herstellbar sind. Besonders bevorzugt ist ein C.I. Pigment Rot 254 mit einer d₅₀-Primärteilchengrößenverteilung zwischen 150 und 450 nm, insbesondere zwischen 300 und 400 nm.

Im Falle, dass deckende Pigmentformen gewünscht werden, erweist sich eine thermische Nachbehandlung in Wasser oder einem organischen Lösemittel, ggf. einem Gemisch aus Wasser und organischem Lösemittel, als zweckmäßig. Vorzugsweise verwendet man dazu Aromaten, die mit Halogen, Alkyl oder Nitro substituiert sind, Heteroaromaten, wie Pyridin, Picolin oder Chinolin, Ketone, Alkohole, Ether, Amide oder Sulfoxide.

Die Herstellung der erfindungsgemäßen Pigmentzubereitung erfolgt zweckmäßig durch Vermischen der Verbindungen der Formeln (I), (II) und ggf. (III) in den genannten Mengenverhältnissen, in trockener Form oder als wasserfeuchte Filterkuchen. Das Vermischen kann auch mit einem Mahlvorgang verbunden sein, wobei übliche Mahlaggregate wie beispielsweise Kugel-, Luftstrahl-, Prall- Perl- oder Rollmühlen bevorzugt werden.

Bevorzugt ist das Anrühren von C.I. Pigment Rot 254 der Formel (I) mit den Synergisten der Formel (II) und ggf. (III) in Wasser und nachfolgender Isolierung und Trocknung nach üblichen Methoden, beispielsweise durch Sprüh-, Schrank-, Band-, Schaufel-, Spinflash-, Taumel- oder Wirbelschichttrocknung.

Die erfindungsgemäße Pigmentzubereitung kann als Suspension, Filterkuchen oder trockenes Material einer Lösungsmittelnachbehandlung unterzogen werden, um eine homogenere Teilchenform zu erhalten. Bevorzugt ist dabei die Verwendung von Wasser oder wasserdampfflüchtigen Lösungsmitteln wie Alkoholen und aromatischen Lösungsmitteln, besonders bevorzugt verzweigte oder unverzweigte C₁-C₆ -Alkohole, Toluol, Xylol, Chlorbenzol, Dichlorbenzol, Nitrotoluol oder Nitrobenzol, meist unter erhöhter Temperatur, beispielsweise bis 200 °C, und gegebenenfalls unter erhöhtem Druck.

Die erfindungsgemäße Pigmentzubereitung kann noch weitere übliche Hilfsmittel oder Zusatzstoffe enthalten, wie beispielsweise Tenside, Dispergiermittel, Füllstoffe, Stellmittel, Harze, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren, vorzugsweise in einer Menge von 0,01 bis 15 Gew.-%, insbesondere 0,1 bis 10 Gew.-%, bezogen auf das Gesamtgewicht der Pigmentzubereitung.

Die erfindungsgemäßen Pigmentzubereitungen lassen sich prinzipiell zum Pigmentieren von allen hochmolekularen organischen Materialien natürlicher oder synthetischer Herkunft einsetzen, beispielsweise von Kunststoffen, Harzen, Lacken, Anstrichfarben, Druckfarben, elektrophotographischen Tonem und Entwicklern, Farbfiltern sowie von Tinten, auch Ink-Jet-Tinten.

Hochmolekulare organische Materialien, die mit den erfindungsgemäßen Pigmentzubereitungen pigmentiert werden können, sind beispielsweise Celluloseverbindungen,wie beispielsweise Celluloseether und -ester, wie Ethylcellulose, Nitrocellulose,Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Hamstoffharze,Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.

Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen.

Die erfindungsgemäßen Pigmentzubereitungen sind besonders geeignet zum Pigmentieren von lösemittelhaltigen Lacken, insbesondere aber von wasserbasierenden Lacksystemen, z. B. für die Automobilindustrie.

Der Vorteil besteht in der Flockungsstabilität und der Überlackierechtheit in beiden Lacksystemen. Besonders vorteilhaft ist die Überlackierechtheit in Wasserbasislacken. Wasserbasislacke, die vorteilhaft mit den erfindungsgemäßen Pigmentzubereitungen pigmentiert werden können, sind beispielsweise Lacke auf Acryl-, Polyurethan-, Polyester- oder Polyisocyanat-Basis oder Kombinationen davon.

Gegenstand der Erfindung ist daher auch ein Wasserbasis-Lack, der die erfindungsgemäße Pigmentzubereitung enthält, vorzugsweise in einer Konzentration von 0,1 bis 20 Gew.-%, bezogen auf die trockene Lackschicht.

In den nachstehenden Beispielen bedeuten Teile Gewichtsteile und Prozente Gewichtsprozent.

### Herstellungsbeispiel 1:

20 Teile von 3-(4-Chloro-phenyl)-6-phenyl-2,5-dihydro-pyrrolo[3,4-c]pyrrol-1,4-dion, hergestellt nach EP 0 184 982 A1 Beispiel 6, werden in 150 Teilen Oleum (20 % SO₃) für 18 Stunden bei Raumtemperatur gerührt, auf 2000 Teile Eiswasser gefällt und mit 150 Teilen Natriumchlorid versetzt. Die erhaltene rote Suspension wird abgesaugt, mit 300 Teilen 5 %iger Natriumchloridlösung gewaschen und getrocknet. Man erhält 20 Teile eines Gemisches, welches im Wesentlichen aus der Sulfonsäure [Vorstufe zum Salz (II)] besteht. ¹H-NMR (500 MHz, D₂SO₄): 7.39 (d, ³J=9 Hz, 2H), 7.28 (t, ³J=9 Hz, 4H), 6.84 (d, ³J=9 Hz, 2H).

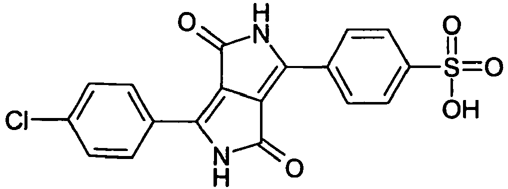

### Herstellungsbeispiel 2: Herstellung der Ba-Salz -Verbindung (II)

20 Teile des aus Herstellungsbeispiel 1 beschriebenen Produktes werden in 2000 Teilen Wasser angerührt, auf 70 °C erhitzt und mit Natronlauge auf pH = 8 gestellt. Die dunkelrote Lösung wird mit 20 Teilen BaCl₂ versetzt und anschließend noch 1 Stunde nachgerührt. Es wird filtriert und mit 500 Teilen Wasser gewaschen. Man erhält einen dunkelroten Presskuchen mit einem Trockengehalt von 36 % und einem Bariumgehalt von 8.7 % (Tr).

### Herstellungsbeispiel 3: Herstellung der Sr-Salz -Verbindung (II)

Die Synthese erfolgt analog zu Herstellungsbeispiel 2, jedoch werden 20 Teile Strontiumchlorid anstelle von Bariumchlorid verwendet. Man erhält einen hellroten Presskuchen mit einem Trockengehalt von 47 % und einem Strontiumgehalt von 5.4%.

### Herstellungsbeispiel 4: Herstellung eines Gemisches der Verbindungen (I), (II) und (III) (als Sulfonsäure)

Zu einer heißen Lösung aus tert-Amylalkohol und Natrium-tert-amylat wird eine Mischung bestehend aus 10 Teilen Benzonitril, 14 Teilen 4-Chlorbenzonitril und 30 Teilen Bernsteinsäurediisopropylester innerhalb zwei Stunden kontinuierlich zugegeben. Nach einer Nachrührzeit von zwei Stunden wird die Reaktionsmischung mit 25 Teilen Eisessig, 100 Teilen Wasser und 500 Teilen Isopropanol versetzt und eine weitere Stunde bei 100 °C gerührt. Anschließend wird filtriert, mit Isopropanol und Wasser gewaschen und im Trockenschrank bei 75 °C getrocknet. Man erhält 20 Teile eines roten Feststoffes. Das erhaltene Pigment wird in 200 Teile Oleum (20 % SO₃) eingetragen und die Mischung 18 Stunden bei Raumtemperatur gerührt. Die Lösung wird auf 2000 Teile Eiswasser gefällt und mit 150 Teilen Natriumchlorid ausgesalzen. Die erhaltene Suspension wird abgesaugt, mit 500 Teilen 5 % NaCl-Lösung gewaschen und im Trockenschrank bei 75 °C im Vakuum getrocknet. Man erhält 50 Teile eines Produktgemisches, welches zu 65 % aus C.I. Pigment Rot 254, 30 % Monosulfonsäure (II) und 5 % Bissulfonsäure (III) besteht.

Herstellungsbeispiel 5: Herstellung der Ba-Salz - Verbindungen (II) und (III) 20 Teile des aus Herstellungsbeispiel 4 erhaltenen Produktes werden in 2000 Teilen Wasser angerührt, auf 70 °C erhitzt und mit Natronlauge auf pH = 9 gestellt. Die dunkelrote Lösung wird mit 20 Teilen Barium-(II)-chlorid versetzt und anschließend noch 1 Stunde nachgerührt. Es wird filtriert und mit 500 Teilen Wasser gewaschen. Man erhält einen roten Presskuchen mit einem Trockengehalt von 35 % und einem Bariumgehalt von 5,03 % (Tr).

### Herstellungsbeispiel 6: Herstellung der Sr-Salz - Verbindungen (II) und (III)

Die Herstellung erfolgt analog zu Herstellungsbeispiel 5, jedoch werden 20 Teile Strontiumchlorid anstelle von Bariumchlorid verwendet. Trockengehalt 47 %, Strontiumgehalt 3,8 %.

### Vergleichsherstellungsbeispiel 1: Herstellung der Ca-Salz - Verbindung (II)

Die Synthese erfolgt analog zu Herstellungsbeispiel 2, jedoch werden 20 Teile Calciumchlorid anstelle von Bariumchlorid verwendet. Man erhält einen hellroten Presskuchen mit einem Trockengehalt von 36 % und einem Calciumgehalt von 2.50 %.

### Vergleichsherstellungsbeispiel 2: Herstellung der Ca-Salz - Verbindungen (II) und (III)

Die Herstellung erfolgt analog zu Herstellungsbeispiel 5, jedoch werden 20 Teile Calciumchlorid anstelle von Bariumchlorid verwendet. Trockengehalt 37 %, Calciumgehalt: 2.25 %.

In den nachfolgenden Beispielen wird ein Pigment Rot 254 eingesetzt, dass gemäß EP 0 094 911 A2, Beispiel 6 hergestellt wurde.

### Beispiel 1:

2,7 Teile (entspricht 1 Teil Trockengewicht) des aus Herstellungsbeispiel 2 erhaltenen Presskuchens werden mit 200 Teilen feuchtem Presskuchen von Pigment Rot 254 (Trockengehalt 50 %; entspricht 100 Teilen bezogen auf das Trockengewicht) in 2000 Teilen Wasser für 2 Stunden bei Raumtemperatur verrührt, filtriert, getrocknet und gemahlen.

### Beispiel 2:

2,1 Teile (entspricht 1 Teil Trockengewicht) des aus Herstellungsbeispiel 3 erhaltenen Presskuchens werden mit 200 Teilen feuchtem Presskuchen von Pigment Rot 254 (Trockengehalt 50 %; entspricht 100 Teilen bezogen auf das Trockengewicht) in 2000 Teilen Wasser für 2 Stunden bei Raumtemperatur verrührt, filtriert, getrocknet und gemahlen.

### Beispiel 3:

Man geht vor wie in Beispiel 2 beschrieben, verwendet jedoch lediglich 1,5 Teile des Presskuchens aus Herstellungsbeispiel 3.

### Beispiel 4:

Man geht vor wie in Beispiel 3 beschrieben, verwendet jedoch lediglich 1 Teil des Presskuchens aus Herstellungsbeispiel 3.

### Beispiel 5:

2,8 Teile (entspricht 1 Teil Trockengewicht) des aus Herstellungsbeispiel 5 erhaltenen Presskuchens werden mit 200 Teilen feuchtem Presskuchen von Pigment Rot 254 (Trockengehalt 50 %; entspricht 100 Teilen bezogen auf das Trockengewicht) in 2000 Teilen Wasser für 2 Stunden bei Raumtemperatur verrührt, filtriert, getrocknet und gemahlen.

### Beispiel 6:

2 Teile (entspricht 1 Teil Trockengewicht) des aus Herstellungsbeispiel 6 erhaltenen Presskuchens werden mit 200 Teilen feuchtem Presskuchen von Pigment Rot 254 (Trockengehalt 50 %; entspricht 100 Teilen bezogen auf das Trockengewicht) in 2000 Teilen Wasser für 2 Stunden bei Raumtemperatur verrührt, filtriert, getrocknet und gemahlen.

### Beispiel 7:

4 Teile (entspricht 2 Teilen Trockengewicht) des aus Herstellungsbeispiel 6 erhaltenen Presskuchens werden mit 200 Teilen feuchtem Presskuchen von Pigment Rot 254 (Trockengehalt 50 %; entspricht 100 Teilen bezogen auf das Trockengewicht) in 2000 Teilen Wasser für 2 Stunden bei Raumtemperatur verrührt, filtriert, getrocknet und gemahlen.

### Beispiel 8:

6 Teile (entspricht 3 Teilen Trockengewicht) des aus Herstellungsbeispiel 6 erhaltenen Presskuchens werden mit 200 Teilen feuchten Presskuchen von Pigment Rot 254 (Trockengehalt 50 %; entspricht 100 Teilen bezogen auf das Trockengewicht) in 2000 Teilen Wasser für 2 Stunden bei Raumtemperatur verrührt, filtriert, getrocknet und gemahlen.

### Vergleichsbeispiel 1:

2,7 Teile (entspricht 1 Teil Trockengewicht) des aus Vergleichsherstellungsbeispiel 1 erhaltenen Presskuchens werden mit 200 Teilen feuchtem Presskuchen von Pigment Rot 254 (Trockengehalt 50 %; entspricht 100 Teilen bezogen auf das Trockengewicht) in 2000 Teilen Wasser für 2 Stunden bei Raumtemperatur verrührt, filtriert, getrocknet und gemahlen.

### Vergleichsbeispiel 2:

2,7 Teile (entspricht 1 Teil Trockengewicht) des aus Vergleichsherstellungsbeispiel 2 erhaltenen Presskuchens werden mit 200 Teilen feuchtem Presskuchen von Pigment Rot 254 (Trockengehalt 50 %; entspricht 100 Teilen bezogen auf das Trockengewicht) in 2000 Teilen Wasser für 2 Stunden bei Raumtemperatur verrührt, filtriert, getrocknet und gemahlen.

### Anwendungsbeispiele 1a bis 8a: Flockungsverhalten im lösungsmittelhaltigen Einbrennlack

Die Pigmentzubereitungen der Beispiele 1 bis 8 werden hinsichtlich ihres Flockungsverhaltens in einem Einbrennlack geprüft. Dafür wird ein niedrigviskoser Alkyd-Melamin-Lack mit einem Pigmentgehalt von 5-8 % auf eine PE-Folie gegossen (Glanzwerte "gegossen"). Diesen lässt man - senkrecht aufgehängt - 1 Stunde ablüften und trocknet anschließend im Ofen bei 130 °C. Eine zweite PE-Folie wird mit einem Folienziehgerät analog aufgetragen (Glanzwerte "gezogen").

Bei geringer Flockung des Pigmentes sind die Glanzwerte nach beiden Methoden annähernd gleich. Die Messung des Glanzes erfolgte nach EN ISO 2813 bei einem Winkel von 20°.

| | Glanzwerte | |
|---|---|---|
| | gezogen | gegossen |
| Anwendungsbeispiel 1a | 76 | 82 |
| Anwendungsbeispiel 2a | 80 | 85 |
| Anwendungsbeispiel 3a | 84 | 79 |
| Anwendungsbeispiel 4a | 71 | 65 |
| Anwendungsbeispiel 5a | 84 | 83 |
| Anwendungsbeispiel 6a | 84 | 84 |
| Anwendungsbeispiel 7a | 81 | 80 |
| Anwendungsbeispiel 8a | 82 | 80 |
| | | |
| Pigment Rot 254 | 73 | 35 |

### Anwendungsbeispiele 1 b bis 8b:

Die Pigmentzubereitungen der Beispiele 1 bis 8 sowie der Vergleichsbeispiele 1 und 2 werden hinsichtlich ihrer Überlackierechtheit geprüft. Die Prüfung erfolgt in einem Alkyd-Melamin-Lacksystem und einem Wasserlack (auf Basis von Wasser und Butyldiglycol) bei einem Pigmentgehalt von 8 % im jeweiligen Lacksystem. Zur Bestimmung der Überlackierechtheit wird ein unpigmentierter Weißlack auf den jeweiligen Lack aufgetragen und während 30 Minuten bei 120 °C und 160 °C getrocknet.

Zur Quantifizierung der Überlackierechtheit wird der Gesamtfarbabstand delta E zum unpigmentierten Weißlack gemessen. Ab einem Gesamtfarbabstand von delta E größer als 4 ist eine deutliche Einfärbung des Weißlackes erkennbar.

| | Überlackierechtheit delta E | |
|---|---|---|
| | Lösungsmittellack | Wasserlack |
| Anwendungsbeispiel 1b | Unter 0,4 | 1,2 |
| Anwendungsbeispiel 2b | Unter 0,4 | 1,7 |
| Anwendungsbeispiel 3b | Unter 0,4 | 1,7 |
| Anwendungsbeispiel 4b | Unter 0,4 | 1,8 |
| Anwendungsbeispiel 5b | Unter 0,4 | 1,2 |
| Anwendungsbeispiel 6b | Unter 0,4 | 1,7 |
| Anwendungsbeispiel 7b | Unter 0,4 | 2,1 |
| Anwendungsbeispiel 8b | Unter 0,4 | 2,6 |
| | | |
| Vergleichsanwendungsbeispiel 1 | Unter 0,4 | 5,5 |
| Vergleichsanwendungsbeispiel 2 | Unter 0,4 | 7,6 |
| Pigment Rot 254 | Unter 0,4 | 1,0 |

## Patentansprüche

1. Pigmentzubereitung, enthaltend
a) 95 bis 99,9 Gew.% C.I. Pigment Red 254 der Formel (I);
b) 0,1 bis 5 Gew.-% des Sulfonsäuresalzes der Formel (II);
c) 0 bis 0,5 Gew.-% des Bissulfonsäuresalzes der Formel (III),
jeweils bezogen auf das Gesamtgewicht der Pigmentzubereitung 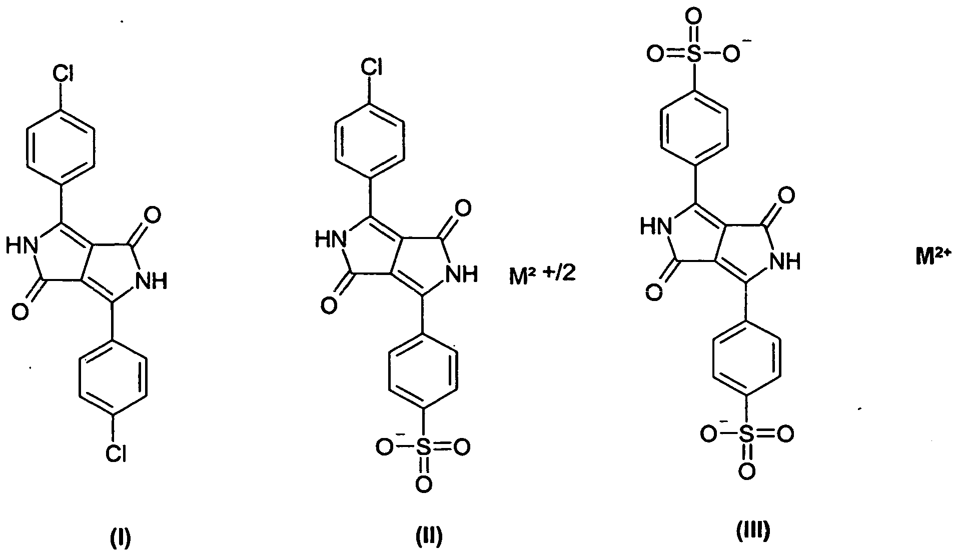 wobei M²⁺ einem Strontiumion, einem Bariumion oder einer Mischung aus Strontium- und Bariumionen entspricht.

2. Pigmentzubereitung nach Anspruch 1, **gekennzeichnet durch** einen Gehalt von
a) 97 bis 99,9 Gew.% von C.I. Pigment Red 254,
b) 0,1 % bis 3 Gew.-% des Sulfonsäuresalzes (II),
c) 0 bis 0,3 Gew.-% des Bissulfonsäuresalzes (III).

3. Pigmentzubereitung nach einem der Ansprüche 1 oder 2, **dadurch gekennzeichnet dass** M²⁺ einem Strontiumion entspricht.

4. Verfahren zur Herstellung einer Pigmentzubereitung nach einem oder mehreren der Ansprüche 1 bis 3, **dadurch gekennzeichnet, dass** ein C.I. Pigment Red 254 der Formel (I) mit den Verbindungen der Formel (II) und ggf. (III) vermischt wird.

5. Verfahren nach Anspruch 4, **dadurch gekennzeichnet, dass** ein C.I. Pigment Red 254 der Formel (I) mit den Verbindungen der Formel (II) und ggf. (III) in Wasser angerührt wird.

6. Verwendung einer Pigmentzubereitung nach einem oder mehreren der Ansprüche 1 bis 3 zum Pigmentieren von hochmolekularen organischen Materialien natürlicher oder synthetischer Herkunft.

7. Verwendung nach Anspruch 6 zum Pigmentieren von Kunststoffen, Harzen, Lacken, Anstrichfarben, Druckfarben, elektrophotographischen Tonern und Entwicklern, Farbfiltern sowie von Tinten, insbesondere Ink-Jet-Tinten.

8. Verwendung nach Anspruch 7 zum Pigmentieren von Wasserbasis-Lacken.

9. Wasserbasis-Lack, der die Pigmentzubereitung gemäß einem der Ansprüche 1 bis 3 enthält.

10. Wasserbasis-Lack nach Anspruch 9, der die Pigmentzubereitung in einer Konzentration von 0,1 bis 20 Gew.-%, bezogen auf die trockene Lackschicht, enthält.

## Claims

1. A pigment preparation comprising
a) 95% to 99.9% by weight of C.I. Pigment Red 254 of the formula (I);
b) 0.1% to 5% by weight of the sulfonic acid salt of the formula (II);
c) 0% to 0.5% by weight of the bissulfonic acid salt of the formula (III),
based in each case on the total weight of the pigment preparation 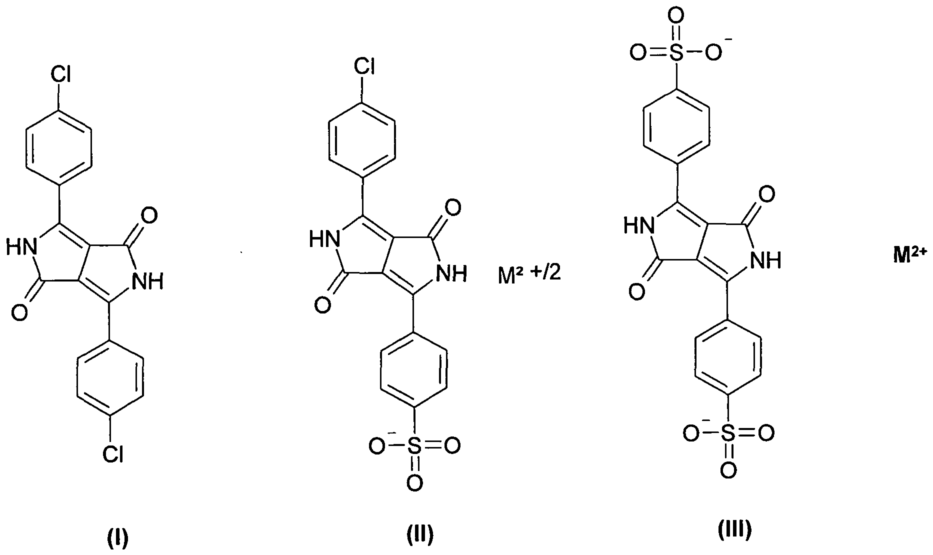 where M²⁺ is a strontium ion, a barium ion or a mixture of strontium and barium ions.

2. The pigment preparation as claimed in claim 1, comprising
a) 97% to 99.9% by weight of C.I. Pigment Red 254,
b) 0.1% to 3% by weight of the sulfonic acid salt (II),
c) 0% to 0.3% by weight of the bissulfonic acid salt (III) .

3. The pigment preparation as claimed in either of claims 1 and 2, wherein M²⁺ is a strontium ion.

4. A process for producing a pigment preparation as claimed in one or more of claims 1 to 3, which comprises mixing a C.I. Pigment Red 254 of the formula (I) with the compounds of the formula (II) and, where used, (III).

5. The process as claimed in claim 4, wherein a C.I. Pigment Red 254 of the formula (I) is stirred with the compounds of the formula (II) and, where used, (III) in water.

6. The use of a pigment preparation as claimed in one or more of claims 1 to 3 for pigmenting high molecular mass organic materials of natural or synthetic origin.

7. The use as claimed in claim 6 for pigmenting plastics, resins, varnishes, paints, printing inks, electrophotographic toners and developers, color filters, and liquid inks, especially inkjet inks.

8. The use as claimed in claim 7 for pigmenting water-based paints.

9. A water-based paint comprising the pigment preparation as claimed in any of claims 1 to 3.

10. The water-based paint as claimed in claim 9, comprising the pigment preparation at a concentration of 0.1% to 20% by weight, based on the dry paint film.

## Revendications

1. Préparation de pigment, contenant
a) 95 à 99,9 % en poids de C.I. Pigment Red 254 de formule (I) ;
b) 0,1 à 5 % en poids du sel d'acide sulfonique de formule (II) ;
c) 0 à 0,5 % en poids du sel d'acide bis-sulfonique de formule (III), chaque fois par rapport au poids total de la préparation de pigment 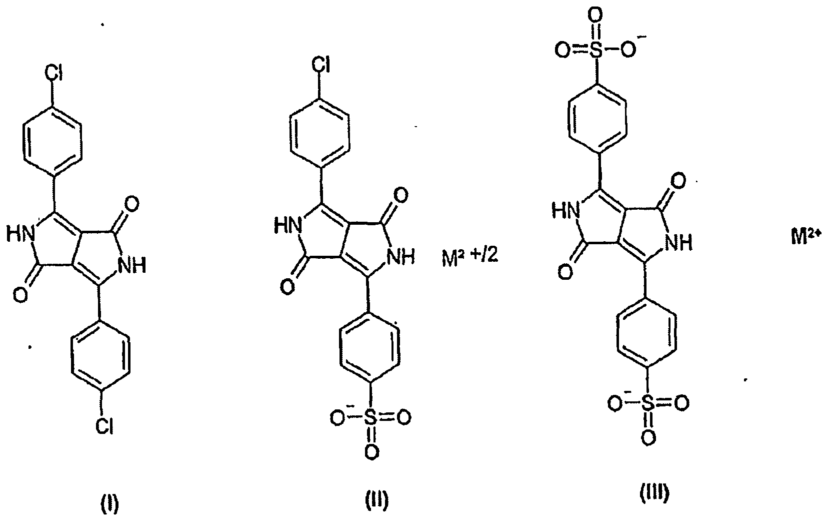 M²⁺ correspondant à un ion strontium, un ion baryum ou un mélange d'ions strontium et baryum.

2. Préparation de pigment selon la revendication 1, **caractérisée par** une teneur de
a) 97 à 99,9 % en poids en C.I. Pigment Red 254,
b) 0,1 à 3 % en poids en le sel d'acide sulfonique (II),
c) 0 à 0,3 % en poids en le sel d'acide bis-sulfonique (III).

3. Préparation de pigment selon la revendication 1 ou 2, caractérisée que M²⁺ correspond à un ion strontium.

4. Procédé pour la production d'une préparation de pigment selon une ou plusieurs des revendications 1 à 3, **caractérisé en ce qu'**on mélange un C.I. Pigment Red 254 de formule (I) avec les composés de formule (II) et éventuellement (III).

5. Procédé selon la revendication 4, **caractérisé en ce qu'**on délaie dans de l'eau un C.I. Pigment Red 254 de formule (I) avec les composés de formule (II) et éventuellement (III).

6. Utilisation d'une préparation de pigment selon une ou plusieurs des revendications 1 à 3, pour la pigmentation de matières organiques de masse moléculaire élevée, d'origine naturelle ou synthétique.

7. Utilisation selon la revendication 6, pour la pigmentation de matières plastiques, résines, laques, peintures, encres d'imprimerie, toners et développeurs électrophotographiques, filtres colorés ainsi que d'encres, en particulier d'encres pour impression par jet d'encre.

8. Utilisation selon la revendication 7, pour la pigmentation de laques à base aqueuse.

9. Laque à base aqueuse, qui contient la préparation de pigment selon l'une quelconque des revendications 1 à 3.

10. Laque à base aqueuse selon la revendication 9, qui contient la préparation de pigment en une concentration de 0,1 à 20 % en poids, par rapport à la couche de laque sèche.
